Europäisches Patentamt

European Patent Office

Office européen des brevets

(11) Publication number: **0 043 207**
A1

## (12) EUROPEAN PATENT APPLICATION

(21) Application number: 81302718.2

(22) Date of filing: 17.06.81

(51) Int. Cl.³: **B 63 H 23/02**
**F 16 H 57/02**

(30) Priority: 23.06.80 GB 8020486

(43) Date of publication of application:
06.01.82 Bulletin 82/1

(84) Designated Contracting States:
CH DE FR IT LI NL SE

(71) Applicant: THE ENGLISH ELECTRIC COMPANY LIMITED
1, Stanhope Gate
London W1A 1EH(GB)

(72) Inventor: Charles, Christopher John
37 Spring Close
Lutterworth Leicestershire(GB)

(74) Representative: Keppler, William Patrick
Central Patent Department The General Electric
Company Limited Hirst Research Centre East Lane
Wembley, Middlesex HA9 7PP(GB)

(54) Gearbox comprising a resiliently mounted pinion.

(57) A marine gearbox designed to suppress the transmission of gear-tooth generated vibration to the support structure. A pinion (3) is mounted in a pinion housing (1), which includes a pinion bearing (15), which in turn is resiliently mounted from a gearwheel housing (4) and supporting structure. Inter-tooth vibration is largely absorbed by the pinion structure rather than transmitted through the relatively massive gearwheel (2) and gearwheel housing (4) to the support structure by providing the resilient mounting with such a stiffness that the characteristic natural frequency of the pinion assembly lies between one third and one half of the lowest tooth contact passing frequency.

-1-

This invention relates generally to gearboxes and particularly, although not exclusively, to the reduction of vibration in marine propulsion gearboxes.

Vibration in large gearboxes, apart from any noise produced, is a cause of inefficiency and excessive wear.

There have, in the past, been a number of causes of gearbox vibration, for example, misalignment of gears, poor tooth profile, torque variations arising from unstable loads, flexing of gear shafts, and suchlike equipment imperfections. Various solutions to these problems have been proposed with some success. Amongst these solutions are the resilient mounting of the gearbox, or the gear wheels and pinions, and to a large extent the above inadequacies of the equipment and its manufacture can thus be overcome.

The present invention is not, however, concerned with the elimination of such equipment imperfections, which are in any case tending to disappear with modern design and manufacturing techniques, but with a very particular source of vibration and the noise associated with it. Even in a highly efficient and smooth running gearbox transmission, vibration arises from the following cause. The contact point or line between teeth of a pinion and gearwheel is constantly changing and moving along each tooth between the root and the tip, and the load on the tooth varies accordingly. The teeth are therefore deflected cyclically and a vibration arises at the tooth contact passing frequency. In marine gearboxes of conventional design this vibration frequency is typically within a range of about 100 - 3500 Hz.

It will be clear from the above that this vibration will arise even with perfect manufacture of the gear teeth and shafts.

The equipment inadequacies outlined above and the solutions generally proposed take no cognizance of this specific problem and the particular vibration frequency arising.

However, in naval propulsion installations this problem is very significant. This tooth generated vibration is transmitted through the gearbox to the supporting feet and hence to the structure of the vessel. Under-water transmission of the resulting noise signal can be detected by an enemy who may thereby be able to identify the vessel, the security of which is therefore threatened.

It is an object of the invention to significantly reduce the transmission of this particular tooth generated noise to the vessel structure.

According to the present invention, a gearbox comprises a gearwheel mounted in a gearwheel housing and a pinion in driving engagement with the gearwheel, the pinion being mounted in a pinion housing which is fixed to the gearwheel housing by a resilient mounting, the pinion assembly, comprising the pinion and the pinion housing, having a mass substantially smaller than that of the gearwheel, and the resilient mounting having such stiffness that the characteristic natural frequency of the pinion assembly, in respect of tooth generated vibration, lies between one third and one half of the lowest tooth contact passing frequency, noise generated by the tooth engagement vibrational forces being thereby substantially attenuated and engagement between pinion and gearwheel remaining effectively rigid for power transmission.

Typically the characteristic natural frequency should lie between 50 - 120 Hz.

The stiffness of said resilient mounting may be given by the value of K in the expression:

$$(M_1 + M_3) \; \pi^2 F_e^{\,2} > K > (M_1 + M_3) \; 4/9 \; \pi^2 F_e^{\,2}$$

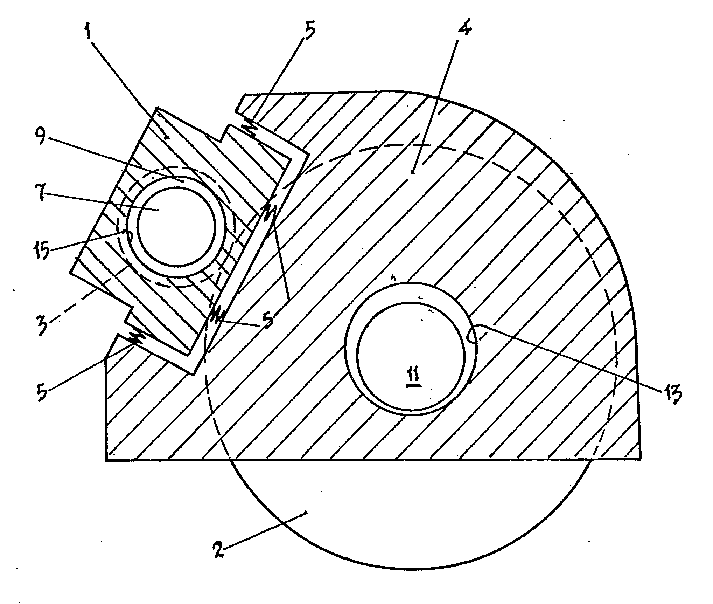

A marine propulsion gearbox in accordance with the invention will now be described, by way of example, with reference to the accompanying drawing showing, somewhat diagrammatically, a section of a gearbox normal to the gear axes.

The gearbox comprises, in the elementary form shown in the drawing, a pinion 3, a pinion housing 1 which includes a pinion bearing block, a gearwheel 2, a gearwheel housing 4, and a resilient mounting represented in the drawing by springs 5. The springs 5 connect the housings 1 and 4 together with the pinion 3 in engagement with the gearwheel 2. The springs 5 are formed by struts and ties and appear as structural members. Their stiffness is therefore considerably greater than that of previously proposed arrangements using conventional springs and flexible blocks etc.

The pinion 3 is a simple toothed cylinder, either solid or hollow, the ends being of slightly reduced diameter to form shaft journals 7. Each journal 7 floats in an oil film 9, in bearing 15, in the pinion housing 4.

The drawing shows, to an exaggerated scale, the eccentricity of the journal 7 in the bearing 15 that arises from the necessity to accommodate an oil film.

The gearwheel 2 is a composite structure using welded, bolted, or cast components. It is fixedly mounted on a gearwheel shaft 11, the shaft 11 has each end journalled in a bearing 13 in the gearwheel housing 4. A gap for an oil film is shown in the drawing between the gearwheel shaft 11 and the bearing 13.

The masses of the components determine the stiffness of the springs 5 so that vibration generated at the gear teeth is not transmitted through the gearbox supporting feet, to the supporting structure in the vessel. The mass of the gearwheel 2 is approximately equal to that of the gearwheel housing 4. The mass of gearwheel 2 is approximately 20 to 30 times the mass of the pinion 3. The mass of the gearwheel 2 is about 2 to 3 times greater than the combined masses of the pinion 3 and the pinion housing 1.

The stiffness of the springs 5 is determined from the requirement that the characteristic natural frequency, along an axis parallel to the resultant force between the contacting gear teeth, lies between one third and one half
of the lowest tooth contact passing frequency in the range
of interest. This may be expressed by the relation

$$(M_1 + M_3) \; \pi^2 F_e^2 \; > \; K \; > \; (M_1 + M_3) \; 4/9 \; \pi^2 F_e^2$$

$M_1$, $M_3$ being the mass of the pinion housing and pinion
respectively, $F_e$ - the exciting frequency, and K the spring
stiffness.

The nature of the springs 5 is controlled solely
by the need to accommodate the small levels of dynamic
displacement occurring in the pinion housing, and may
consist of a number of struts and/or ties.

It may be seen that the springs 5 are incorporated
to deal solely with self induced vibrations rather than any
externally applied cyclic loading. Their stiffness is
consequently such that, as far as power transmission is
concerned, the gearing is effectively rigid. The resilience
of the springs 5 would not in any way accommodate the
various manufacturing, design or assembly imperfections
that previously proposed arrangements commonly deal with.

## CLAIMS

1.     A gearbox comprising a gearwheel mounted in a gearwheel housing and a pinion in driving engagement with the gearwheel, the pinion being mounted in a pinion housing which is fixed to the gearwheel housing by a resilient mounting, the pinion assembly, comprising the pinion and the pinion housing, having a mass substantially smaller than that of the gearwheel, characterised in that the resilient mounting has such stiffness that the characteristic natural frequency of the pinion assembly, in respect of tooth generated vibration, lies between one third and one half of the lowest tooth contact passing frequency, so that noise generated by the tooth engagement vibrational forces are thereby substantially attenuated and engagement between pinion and gearwheel remains effectively rigid for power transmission.

2.     A gearbox according to Claim 1, characterised in that the characteristic natural frequency lies between 50 - 120 Hz.

3.  .  A gearbox according to Claim 1 or Claim 2, characterised in that the stiffness of the resilient mounting is given by the value of K in the expression:

$$(M_1+M_3) \ \pi^2 F_e^2 > K > (M_1+M_3) \ 4/9 \ \pi^2 F_e^2$$

## DOCUMENTS CONSIDERED TO BE RELEVANT

| Category | Citation of document with indication, where appropriate, of relevant passages | Relevant to claim |
|---|---|---|
| | FR - A - 2 032 831 (STE VENOT-PIC) | 1 |
| | * the whole document * | |
| | --- | |
| | FR - A - 1 548 618 (STE FIVES LILLE-CAIL) | 1 |
| | * page 2, lines 26-36 * | |
| | --- | |
| | AT - A - 300 016 (BROWN-BOVERI) | 1 |
| | * page 2, lines 46-59 * | |
| | --- | |
| | J.P. DEN HARTOG: "VIBRATIONS ET MOUVEMENTS VIBRATOIRES" published by Dunod, 1936 PARIS (FR) page 69 | 1 |
| | * the whole document * | |
| | ------ | |

**CLASSIFICATION OF THE APPLICATION (Int. Cl.³)**

B 63 H 23/02
F 16 H 57/02

**TECHNICAL FIELDS SEARCHED (Int. Cl.³)**

F 16 H
F 16 J
B 63 H

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 22-09-1981 | DE SCHEPPER |

EPO Form 1503.1  06.78